# EUROPÄISCHE PATENTSCHRIFT

(11) **EP 2 782 787 B1**
(45) Veröffentlichungstag und Bekanntmachung des Hinweises auf die Patenterteilung: **20.01.2016**
(21) Anmeldenummer: 12787748.8
(22) Anmeldetag: 20.11.2012
(51) Int. Cl.: B60R 13/02

(54) **MITTELKONSOLE FÜR FAHRZEUGE SOWIE VERFAHREN ZU DEREN HERSTELLUNG**
CENTER CONSOLE FOR VEHICLE AND METHOD FOR PRODUCING SAME
CONSOLE CENTRALE POUR VÉHICULE ET SON PROCÉDÉ DE FABRICATION

(30) Priorität: 21.11.2011 DE 102011086701
(43) Veröffentlichungstag der Anmeldung: 01.10.2014
(73) Patentinhaber: Lisa Dräxlmaier GmbH, 84137 Vilsbiburg (DE)
(72) Erfinder: WINKLBAUER, Manfred, 84034 Landshut (DE)
(86) Internationale Anmeldenummer: PCT/EP2012/073079
(87) Internationale Veröffentlichungsnummer: WO 2013/076066

(56) Entgegenhaltungen:
- WO-A1-00/54952
- DE-A1-102007 007 387
- JP-A- 2000 272 330
- JP-U- 61 150 241
- JP-U- 62 076 744

## Beschreibung

Die vorliegende Erfindung betrifft Mittelkonsolen für Fahrzeuge, insbesondere Kraftfahrzeuge sowie ein Verfahren zu deren Herstellung.

Im Stand der Technik werden Mittelkonsolen in der Regel materialeinheitlich, das heißt einteilig in einem Spritzgießverfahren hergestellt. Sie weisen im Querschnitt im Wesentlichen eine U-Form auf und werden in einer Richtung im Wesentlichen parallel zu den gegenüberliegenden Schenkeln des "U" entformt. Der so hergestellte Konsolenträger wird mit zahlreichen nachträglich angefügten Anbauteilen wie Luftkanal, Versteifungen, Blenden etc. versehen, die ebenfalls im Spritzgießverfahren, aber separat, hergestellt werden. Als Fügeprozesse kommen Verschrauben, Verclipsen, Verschweißen, Verkleben etc. in Frage. Das separate Herstellen und Anbringen dieser ebenfalls im Spritzguss hergestellten Anbauteile ist zeit- und kostenintensiv. Zusätzlich muss zwischen den einzelnen Komponenten zum Ausgleich von Toleranzen für die Fügeverfahren und zur Vermeidung von Geräuschen im Gebrauch ein Abstand gehalten werden, welcher den benötigten Bauraum vergrößert. Auch kommt es durch die vielen Bauteile zwangsweise zu entsprechender Doppelwandigkeit innerhalb des Systems und folglich auch zu einem erhöhten Gewicht.

JP 61150241 offenbart ein Mittelkonsole nach dem Oberbegrift des Anspruchs 1.

Darüber hinaus ist aus der EP 1 595 74 7 A1 eine Mittelkonsole bekannt, deren Konsolenträger in Längsrichtung in zwei Hälften geteilt ist, wobei die Hälften über ein Innenteil, welches wiederum in zwei Hälften unterteilt ist, verbunden werden. Auch hier ist eine Vielzahl von separat herzustellenden und anzufügenden Anbauteilen wie beispielsweise die Teile des Luftkanals, die Innenteile, Blenden etc. erforderlich, so dass auch hier die Herstellung kosten- und zeitintensiv ist. Darüber hinaus liegt in Teilbereichen, in denen Konsolenträgerinnenteil und Seitenverkleidung einander überdecken, eine Dreifachwandigkeit vor. Die Mittelkonsole hat damit gleichfalls ein hohes Gewicht.

Vor diesem Hintergrund bestand die Aufgabe der vorliegenden Erfindung darin, eine kostengünstige und leichte Mittelkonsole mit möglichst hohem Grad an Systemintegration sowie ein Verfahren zu deren Herstellung zu schaffen.

Diese Aufgabe wird durch eine Mittelkonsole mit den Merkmalen des Anspruchs 1 sowie ein Verfahren mit den Merkmalen des Anspruchs 11 gelöst. Vorteilhafte Weiterbildungen der vorliegenden Erfindung finden sich in den Unteransprüchen.

Der vorliegenden Erfindung liegen zwei primäre Gedanken zu Grunde, die in Kombination zur Lösung der obigen Aufgabe führen. Ein Gedanke liegt darin, den Konsolenträger beziehungsweise die Mittelkonsole in eine erste und eine zweite Hälfte zu unterteilen, die unmittelbar, das heißt miteinander in Kontakt kommend, zusammengefügt werden, sodass auf den einander gegenüberliegenden Seiten der jeweiligen Seitenwände der Hälften viele Anbauteile wie zum Beispiel Luftkanal, Versteifungen, Lager, Verbindungsstege und Blenden integriert werden können. Um diese Anbauteile zu integrieren, ist es jedoch erforderlich, dass die entsprechend materialeinheitlich mit den Hälften hergestellten Elemente zumindest teilweise bis zur Trennebene der zwei Hälften vorragen. Bei den herkömmlicher Weise verwendeten Spritzgießverfahren (dem sogenannten Kompaktspritzguss) war dies jedoch auf Grund des einzuhaltenden Wandstärkenverhältnisses zwischen der Wandstärke der Seitenwand und der Wandstärke der Anbauteile nicht möglich oder die Seitenwände mussten entsprechend stark beziehungsweise dick gestaltet werden, was zu einem erhöhten Gewicht führt und die Zykluszeit erhöht oder auf Grund von fehlendem Bauraum nicht möglich war. Daher liegt der zweite Gedanke darin, die zwei Hälften in einem thermoplastischen Schaumspritzgießverfahren als thermoplastische Schaumspritzgussteile herzustellen, wodurch das Wandstärkenverhältnis erheblich erhöht werden kann und die Anbauteile mit einer ausreichenden Wandstärke und Stabilität bis zur Trennebene der Hälften konstruiert werden können. Damit entsteht durch das Zusammenfügen der zwei Hälften ein Mittelkonsolenträger beziehungsweise eine Mittelkonsole, bei der viele, bisher zusätzliche Bauteile schon beinhaltet sind und die damit sowohl weniger zeit- als auch weniger kostenintensiv herstellbar ist. Darüber hinaus kann die Mittelkonsole auf Grund der fehlenden Mehrfachwandigkeit sowie der Ausbildung als ohnehin leichteres thermoplastisches Schaumspritzgussteil in ihrem Gewicht erheblich reduziert werden.

Dementsprechend definiert die vorliegende Erfindung eine Mittelkonsole für Fahrzeuge, insbesondere Kraftfahrzeuge. Eine Mittelkonsole ist dabei ein Teil, das sich in der Regel vom vorderen Fußraum eines Fahrzeugs bis zwischen die Vordersitze erstreckt. Mittelkonsolen können dabei in der Regel Bedien- und Anzeigelemente, eine Aufnahme für den Schalt- oder Wählhebel, Ablagefächer und/oder im Bereich zwischen den vorderen Sitzen eine Armlehne, die gleichzeitig Deckel eines Staufachs sein kann, enthalten. Sie ist in Längsrichtung des Fahrzeugs (X-Richtung) angeordnet und weist zwei Seitenwände, die in Längsrichtung der Mittelkonsole beziehungsweise des Fahrzeugs verlaufen, auf. Dabei liegen die erste und die zweite Seitenwand einander gegenüber. Sie weisen eine einander zugewandte innere Seiten sowie zwei abgewandte Außenseiten auf. Die Außenseiten der Seitenwände können vollständig oder bereichsweise mit einem Dekor versehen, zum Beispiel kaschiert sein. Erfindungsgemäß ist die Mittelkonsole aus einer ersten Hälfte umfassend die erste Seitenwand und einer zweiten Hälfte umfassend die zweite Seitenwand aufgebaut, wobei die zwei Hälften unmittelbar zusammengefügt sind, das heißt durch miteinander in Kontakt bringen, zusammengefügt werden. Dabei kommen alle üblichen Fügeverfahren wie Verschrauben, Verclipsen, Verschweißen, Verkleben etc. in Frage. Dabei können die Konsolenhälften sowohl lösbar aber auch nicht lösbar zusammengefügt werden.

Unter dem Begriff "unmittelbar" ist diesbezüglich zu verstehen, dass die beiden Hälften zumindest bereichsweise beim Zusammenfügen aneinander angrenzen beziehungsweise miteinander in Kontakt stehen, das heißt nicht ausschließlich durch einen Abstand zwischen den Hälften überbrückendes Teil oder Element verbunden sind. Bei den zwei Hälften der erfindungsgemäßen Mittelkonsole handelt es sich jeweils um thermoplastische Schaumgussteile, wobei von jeder der Seitenwände in Richtung der jeweiligen anderen Seitenwand und materialeinheitlich ebenfalls im thermoplastischen Schaumgießverfahren hergestellte Elemente vorragen, die sich in zusammengefügtem Zustand der Hälften zu einem Funktionselement, zum Beispiel einem Luftkanal, einer Blende, Versteifungen, Ablagefächern etc. ergänzen. Unter einem Funktionselement ist diesbezüglich allgemein ein Element zu verstehen, das eine Zusatzfunktion bereit stellt, das heißt eine andere Funktion der Mittelkonsole erfüllt als die Ausbildung der Seitenwand. Darüber hinaus sind die Elemente der zwei Hälften für sich gesehen nicht in der Lage, diese Funktion bereit zu stellen, sondern können diese Funktion nur in Zusammenwirken mit dem anderen beziehungsweise den anderen Elementen zur Verfügung stellen.

Um die Hälften mit den daran angeformten Elementen in einem einfachen Schaumgießwerkzeug herstellen zu können, weisen die Hälften jeweils eine Entformungsrichtung auf, die im Wesentlichen senkrecht zur jeweiligen Seitenwand und/oder im Wesentlichen parallel zu den materialeinheitlich, mit der jeweiligen Seitenwand ausgebildeten Elementen verläuft. Dabei ist unter "im Wesentlichen" zu verstehen, dass auch gewisse Entformungsschrägen vorgesehen werden können, die im Schaumgießverfahren erforderlich sind.

Bezüglich des an sich bekannten thermoplastischen Schaumgießverfahrens wird rein beispielhaft auf die WO 00/54952 verwiesen. Dabei entstehen insbesondere Schaumgussteile, deren Oberfläche im Wesentlichen glatt und denen eines Kompaktspritzgussteils entsprechen, während die zwischen den Außenflächen liegenden Kerne Poren enthalten, die aus dem Schäumprozess resultieren. Hierbei können physikalische Schäumverfahren eingesetzt werden, wie sie in der oben erwähnten WO 00/54952 erläutert sind und bei denen das Treibmittel von Extern in die Kunststoffschmelze entweder im Formenhohlraum oder vor dem.Einbringen der Schmelze in den Formenhohlraum eingebracht wird. Alternativ sind aber auch so genannte chemische thermoplastische Schaumgießverfahren einsetzbar, bei denen das Treibmittel bereits im Kunststoffgranulat vor dem Aufschmelzen enthalten ist und erst beim Aufschmelzen freigesetzt wird.

Es ist besonders bevorzugt, dass die Elemente im zusammengefügten Zustand der Hälften mit ihren der jeweiligen Seitenwand abgewandten Stirnseite in Kontakt stehen beziehungsweise bis zu einer Ebene reichen, entlang der die zwei Hälften der Mittelkonsole geteilt sind. Dabei muss die Ebene nicht zwangsläufig in Querrichtung mittig zwischen den zwei Hälften positioniert sein, sondern kann in die eine oder die andere Richtung versetzt werden. Es ist auch denkbar, innerhalb einer Mittelkonsole mehrere Ebenepositionen zu verwenden, wobei die Ebenen im Verlauf der Längsrichtung stufenförmig angeordnet sind.

Darüber hinaus ergänzen sich die Teile vorteilhafterweise zu einem Luftkanal mit geschlossenem Querschnitt, einem Ablagefach, innen liegenden Versteifungen, die bisher separat gefertigt wurden, einer Aufnahme für separate Funktionselemente wie beispielsweise Schalt- oder Wählhebel oder sonstige Anzeige- oder Bedienelemente, oder einer Blende für ein Ende der Mittelkonsole in Längsrichtung, insbesondere das in Fahrzeugrichtung hinten liegende Ende, ohne dass hierfür zusätzliche Elemente neben den zum Fügen erforderlichen Teilen notwendig wären.

Darüber hinaus ist es besonders bevorzugt, auch materialeinheitlich im thermoplastischen Schaumgießverfahren mit den Seitenwänden im Bereich der Oberseite der Mittelkonsole Verbindungsstege vorzusehen beziehungsweise auszubilden, die mit ihren zugewandten Stirnseiten zusammengefügt werden, um die beiden Hälften und damit die Seitenwände zu verbinden. Das heißt, die Verbindungsstege sind ebenfalls entlang der erwähnten Ebene geteilt und werden zum Verbinden der zwei Hälften zusammengefügt, wobei auch hier die erwähnten Fügeverfahren zum Einsatz kommen können.

Des Weiteren kann es bevorzugt sein, auch Aufnahmen zur Anbindung beziehungsweise Lagerung der Armlehne an den nach Innen weisenden Seiten der zwei Seitenwände vorzusehen. Dadurch dass die Seitenwände beziehungsweise die Mittelkonsole in Längsrichtung geteilt ist, ist es möglich, die Armlehne in diesen Lagern beim Zusammenfügen aufzunehmen, wodurch es möglich wird, die Lagerung von der Oberseite weg weiter nach unten zu platzieren, was zu einer Verringerung der in den Träger eingeleiteten Kräfte führt. Die Lagerung kann sich dabei mit einem geschlossenen, zum Beispiel kreisförmigen Querschnitt ebenfalls in Entformungsrichtung beziehungsweise in der gleichen Richtung erstrecken wie die anderen Elemente und wird vorzugsweise ebenfalls materialeinheitlich ausgebildet.

Zusätzlich ist es auch denkbar, Verstärkungsrippen an den Seitenwänden materialeinheitlich mit auszubilden, die entsprechend schwache Abschnitte zusätzlich verstärken können und sich in der gleichen Richtung wie die Elemente oder das Lager oder die Verbindungsstege, das heißt in oder entlang der Entformungsrichtung von der jeweiligen Seitenwand erstrecken.

Des Weiteren nimmt die Mittelkonsole des Stands der Technik, bei der die Seitenwände materialeinheitlich in einem Bauteil vereinigt sind, eine dreidimensionale Gestalt an, deren Oberfläche nicht ohne Verzerrungen in eine Ebene abgewickelt oder abgebildet werden kann. Dies bedeutet im Umkehrschluss, dass die Oberfläche nicht verzerrungs- und damit störungsfrei mit einem Material kaschiert werden kann, das ursprünglich in einer ebenen Fläche vorliegt, wie dies beispielsweise für Leder, Furniere und dergleichen gilt. Durch die Zweiteiligkeit der vorliegenden Mittelkonsole, bei dem die gegenüberliegenden Seitenwände in separat ausgeformten Bauteilen ausgebildet sind, die anschließend zur Mittelkonsole zusammengefügt werden, ist es jedoch möglich die Außenkontur der Mittelkonsole zumindest partiell so zu gestalten, dass sie eine dreidimensionale Gestalt annimmt, deren Oberfläche ohne Verzerrungen in eine Ebene abgewickelt oder abgebildet werden kann. Dadurch ist es möglich diese partiell so gestaltete Oberfläche direkt (unmittelbar) mit einem Material zu kaschieren, das ursprünglich in einer ebenen Fläche vorliegt, wie beispielsweise Leder, Furnieren, Textilien, etc.

Darüber hinaus ist es denkbar wenigstens eine, bevorzugt beide Hälften in zumindest einem Teilbereich mit einem Dekor zu kaschieren auch unabhängig von dem vorstehenden Aspekt. Dabei wird das Dekor bevorzugt direkt auf den Teilbereich der jeweiligen Hälfte, insbesondere einen Teilbereich der Seitenwand aufkaschiert. Bisher wurden im Stand der Technik solche Dekorschichten zunächst auf einen separaten Träger kaschiert, der wiederum mit dem Konsolenträger, zum Beispiel den Seitenwänden zusammenfügt werden musste. Dabei mussten für unterschiedliche Dekorvarianten, zum Beispiel Leder, Furnier aus Holz oder Stein, etc. unterschiedliche Träger bereitgestellt werden. Alternativ konnten die Konsolenträger, das heißt deren Seitenwände unterschiedlich gestaltet werden, um unterschiedliche Stärken der verschiedenen Dekormaterialien auszugleichen. Dieses Problem kann durch die zweiteilige Gestaltung der Mittelkonsole der vorliegenden Erfindung mit den zwei Hälften ebenfalls behoben werden. Denn das Dekormaterial kann unmittelbar auf die Hälften aufkaschiert werden. Dabei wird vorzugsweise in dem Teilbereich ein Absatz vorgesehen. Soll keine Kaschierung aufgebracht werden, sondern lediglich eine Lackierung vorgesehen werden, dienen die Absätze als Schattenfuge bzw. abgerundete Kanten und sind sichtbar. Wird eine Kaschierung zum Beispiel in Form von Leder in diesem Teilbereich aufgebracht, schließt dieses bündig mit den umgebenden Bauteilflächen ab, wobei die Stärke durch den Absatz ausgeglichen wird. Die Schattenfuge verschwindet. Dabei kann die Kaschierung im Bereich des Absatzes umgeschlagen aufkaschiert sein und gegebenenfalls eine Ziernaht aufweisen.

Neben der oben erwähnten Mittelkonsole schlägt die vorliegende Erfindung auch ein Verfahren zu ihrer Herstellung vor. Hierfür werden die erste und die zweite Hälfte, wie sie oben erläutert wurden, in einem thermoplastischen Schaumgießverfahren hergestellt und nach ihrer Herstellung in einem weiteren Schritt durch bekannte Fügeverfahren miteinander verbunden beziehungsweise zusammengefügt, wobei dieses Zusammenfügen vorteilhafterweise unmittelbar erfolgt, wie es oben erläutert wurde und sich die Elemente der ersten und zweiten Seitenwand im zusammengefügten Zustand zu einem Funktionselement, wie sie oben erwähnt wurden, ergänzen.

Darüber hinaus kann es aus den oben erwähnten Gründen vorteilhaft sein, das Herstellen der ersten und zweiten Hälfte derart durchzuführen, dass ein Formhohlraum während dem Einbringen des Werkstoffs, sprich des Kunststoffes und/oder des Treibmittels in den Formenhohlraum beim Schaumgießverfahren vergrößert wird. Diese Variante führt zusätzlich zu einem steiferen Bauteil.

Weitere Vorteile und Merkmale der vorliegenden Erfindung, die alleinstehend oder in Kombination mit einem oder mehreren der oben erwähnten Merkmale umgesetzt werden können, es sei denn sie widersprechen einander, sind aus der folgenden Beschreibung bevorzugter Ausführungsformen ersichtlich. Diese erfolgt unter Bezugnahme auf die begleitenden Zeichnungen, in denen
Figur 1 eine Draufsicht auf eine Mittelkonsole gemäß der vorliegenden Erfindung zeigt;
Figur 2 einen Längsschnitt entlang der Teilung der zwei Hälften der Mittelkonsole aus Figur 1 zeigt;
Figur 3 einen Querschnitt entlang der Linie 3-3 aus Figur 2 zeigt; und
Figur 4a eine Seitenansicht einer Mittelkonsole der vorliegenden Erfindung mit einem kaschierten Teilbereich und Figur 4b einen Teilquerschnitt der Mittelkonsole aus Figur 4a zeigen.

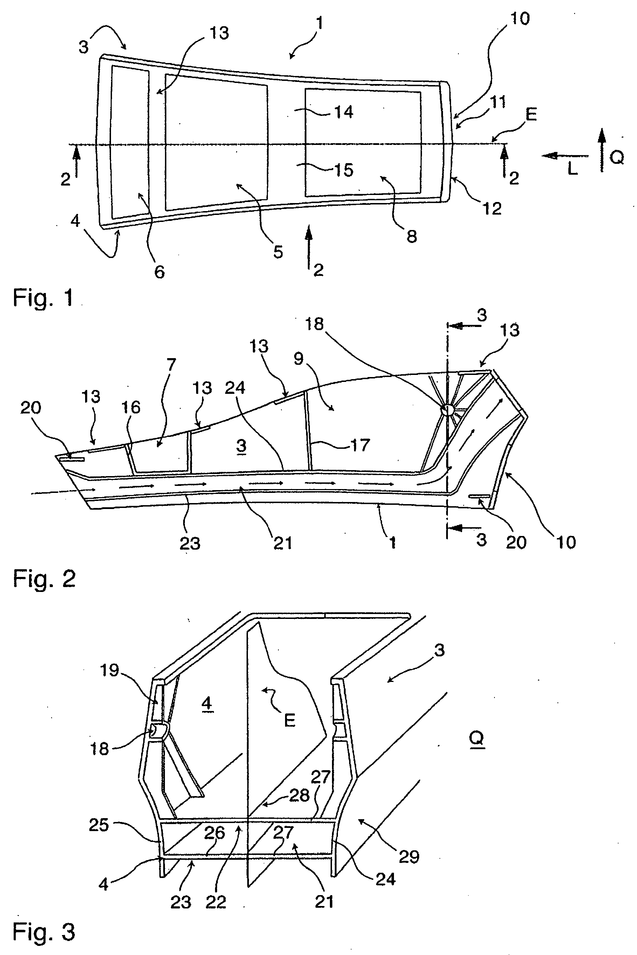

Figur 1 zeigt eine Mittelkonsole gemäß einer Ausführungsform der vorliegenden Erfindung von oben. Sie ist aus einer ersten Hälfte 1 und einer zweiten Hälfte 2 zusammengesetzt. Die erste Hälfte 1 weist eine erste Seitenwand 3 auf, die, wie aus Figur 1 ersichtlich ist, in Längsrichtung L leicht konkav gekrümmt verläuft.

Die zweite Hälfte 2 weist ebenfalls eine Seitenwand 4 auf, die der Seitenwand 3 gegenüberliegt und in der entgegengesetzten Richtung gekrümmt ebenfalls entlang der Längsrichtung L verläuft.

Auch ist aus Figur 1 ersichtlich, dass die erste und zweite Hälfte 1, 2 entlang einer Trennebene E geteilt sind. Dabei ist es bei der Darstellung in Figur 1 so, dass die erste Hälfte 1 unter Berücksichtigung der Ebene E als Symmetrieebene zur zweiten Hälfte 2 gespiegelt ist.

Des Weiteren ist ersichtlich, dass die Mittelkonsole in Figur 1 eine Aussparung 5 aufweist, die im verbauten Zustand den Schalt- oder Wählhebel inklusive entsprechender Abdeckungen aufnimmt. Ferner ist in Fahrzeugslängsrichtung vor der Aussparung 5 eine Aussparung 6 vorgesehen, die Zugang zu einem Ablagefach 7 (Figur 2) gewährt. Ebenfalls ist im Bereich in Fahrzeugslängsrichtung hinter der Aussparung 5 eine weitere Aussparung 8 vorgesehen, die Zugang zu einem Stauraum 9 (Figur 2) gewährt, der im Komplettzustand durch eine nicht dargestellte Armlehne verschlossen ist.

Des Weiteren ist aus Figur 2 ersichtlich, dass der in Fahrzeugslängsrichtung hintere Endbereich der Mittelkonsole durch eine Blende 10 verdeckt ist. Die Blende 10 setzt sich dabei aus zwei Elementen 11, 12 zusammen. Die Elemente 11 und 12 erstrecken sich im Wesentlichen quer zur Längsrichtung L beziehungsweise von ihrer jeweiligen Seitenwand 3, 4 in Richtung der entsprechend anderen Seitenwand 4, 3 und sind im Bereich der Trennebene E zusammengefügt beziehungsweise stehen hier in Kontakt miteinander. Beide Elemente 11, 12 sind bei der dargestellten Ausführungsform materialeinheitlich mit ihrer jeweiligen Seitenwand 3, 4 ausgebildet.

Des Weiteren sind mehrere {hier 4) Verbindungsstege 13 vorgesehen, die sich ebenfalls aus jeweils zwei Elementen 14, 15 zusammensetzen. Die Elemente 14, 15 erstrecken sich dabei ebenfalls quer zur Längsrichtung L beziehungsweise Trennebene E beziehungsweise von ihrer jeweiligen Seitenwand 3, 4 zur entsprechend gegenüberliegenden Seitenwand 4, 3. Auch diese Elemente 14, 15 sind im Bereich der Trennebene E zusammengefügt.

Des Weiteren ist aus Figur 2 ersichtlich, dass weitere Elemente an den jeweiligen Hälften 1, 2 angefügt sind, wobei in Figur 2 lediglich die Hälfte 1 gezeigt ist. Bei diesen Elementen handelt es sich zum Beispiel um die das Ablagefach 7 bildenden Wände 16. Diese erstrecken sich ebenfalls im Wesentlich in Querrichtung Q beziehungsweise von einer Seitenwand 3 in Richtung der entsprechend gegenüberliegenden Seitenwand 4. Die gleichen Wände 16 sind entsprechend auch materialeinheitlich mit der Seitenwand 4 ausgebildet, wobei die Wände 16 der beiden Seitenwände 3, 4 entsprechend an der Trennebene E zusammengefügt werden, um das Ablagefach 7 zu bilden. Gleichermaßen gestaltet es sich mit der Wand 17 zur Bildung des Stauraums 9.

Ferner sind zur Aufnahme der verschwenkbaren Armlehne zum Verschließen der Öffnung 8 in den beiden Hälften 1, 2, wie aus den Figuren 2 und 3 ersichtlich, Lager 18 gebildet. Diese Lager 18 weisen im Querschnitt eine geschlossene Form, hier eine Kreisform, auf und erstrecken sich ebenfalls in Querrichtung. Wobei die Querrichtung, wie später erläutert, auch der Entformungsrichtung entspricht. Darüber hinaus sind zur Verstärkung der Lagerbereiche 18 Verstärkungsrippen 19 materialeinheitlich mit den jeweiligen Hälften 1 und 2 beziehungsweise deren Seitewände 3, 4 angeordnet, die ebenfalls von der Innenseite der jeweiligen Seitenwände 3, 4 in Querrichtung vorragen. Das Lager 18 und die Verstärkungsrippen 19 ragen jedoch nicht bis zur Trennebene E hervor.

Darüber hinaus können, wie es in Figur 2 dargestellt ist, Befestigungsvorbereitungen 20 zur Befestigung der Mittelkonsole am Fahrzeugrohbau materialeinheitlich mit den Hälften ausgebildet werden.

Als weitere Systemintegration hat es sich als besonders vorteilhaft ergeben, einen Luftkanal 21 {Figur 2, Figur 3) zu integrieren. Dieser setzt sich zusammen aus einer oberen Wand 22 und einer unteren Wand 23 sowie entsprechend gegenüberliegenden Seitenwänden 24, 25. Wie es aus Figur 3 am besten ersichtlich ist, sind die Seitenwände 24, 25 durch Abschnitte der Seitenwände 3, 4 gebildet. Die obere und untere Wand 22, 23 besteht ähnlich wie die Elemente 11, 12 und 14, 15 aus zwei Elementen 26, 27, die jeweils materialeinheitlich mit einer entsprechenden Seitenwand 4, 3 ausgebildet sind und sich in Querrichtung Q erstrecken und zwar von einer Innenseite der jeweiligen Seitenwand 4, 3 in Richtung der entsprechend gegenüberliegenden anderen Seitenwand 3, 4. Die jeweiligen Elemente 26, 27 sind entlang einer Fügelinie 28 zusammengefügt, beispielsweise mittels eines Schweißverfahrens. Es können aber auch andere beliebige Fügeverfahren zum Einsatz kommen. Somit kann ein Luftkanal 21 geschaffen werden, der vollständig ohne zusätzliche separate Elemente auskommt.

Folglich kann die Mittelkonsole, wie sie vorliegend beschrieben wurde, aus lediglich zwei Hälften, die jeweils in einem Schaumgießverfahren hergestellt werden, ausgebildet werden und nur diese zwei Hälften müssen zusammengefügt werden. Einziger zusätzlicher Teil kann die Armlehne sein, die beim Zusammenfügen der zwei Hälften 1, 2 mit ihrer Schwenkachse entsprechend in den Lagern 18 aufgenommen wird. Dadurch ergibt sich der zusätzliche Vorteil, dass die Lagerung 18 weiter unten platziert werden kann, was zu einer Verringerung der eingeleiteten Kräfte in den Träger führt, da der Abstand des Lagers 18 zur Aufstandsfläche der Mittelkonsole verringert wird.

Ermöglicht wird die Ausbildung des Luftkanals 21 beziehungsweise seiner Wände 22, 23, der Verbindungsstege 13, der Wände 16 des Ablagefachs 7, der Wand 17 des Stauraums 9, sowie der Blende 10 dadurch, dass die zwei Hälften 1, 2 erfindungsgemäß in einem thermoplastischen Schaumgießverfahren hergestellt werden, zum Beispiel einem solchen wie es in der WO 00/54952 beschrieben ist. Es sind aber auch sogenannte chemische thermoplastische Schaumgießverfahren denkbar. Dabei sind die Hälften 1, 2 entlang der Ebene E in Längsrichtung L geteilt und die Entformungsrichtung wird entlang der Querrichtung Q gewählt. Dadurch ist es einerseits möglich, die Rippen 19, das Lager 18, die Elemente 26, 27, 11, 12, 14, 15 sowie die Befestigungsvorbereitungen 20 ohne Verwendung von Schiebern im Formwerkzeug auszubilden. Andererseits ermöglicht dies Hinterschnitte, zum Beispiel konkave Flächenführungen im Bereich der Seitenwände, wie es bei 29 in Figur 3 dargestellt ist. Durch die Verwendung des thermoplastischen Schaumgießverfahrens können die Wandstärkenverhaltnisse der Wandstärke der Seitenwände 3, 4 zu den Wandstärken der angebundenen Elemente 11, 12, 14, 15, 16, 17, 18, 19, 20, 26, 27, insbesondere der Elemente die sich bis zur Trennebene E erstrecken, in einem Verhältnis zum Beispiel 1:1 oder größer gestaltet werden, was bei herkömmlichen Kompaktspritzgießverfahren nicht möglich ist. Damit wird es durch die Längsteilung entlang der Ebene E und die Verwendung des Schaumgießverfahrens möglich, eine Vielzahl von Elementen bereits zu integrieren und materialeinheitlich mit den zwei Hälften auszubilden. Darüber hinaus wird durch die Verwendung des Schaumgießverfahrens ohnehin ein leichteres Bauteil verwirklicht. Dies wird ferner dadurch unterstützt, dass durch die Integration vielfach auf eine Doppelwandigkeit verzichtet werden kann.

Des Weiteren ist der größte Materialeinsatz bei der Mittelkonsole im Bereich der Seitenwände 3, 4 vorgesehen. Indem im Schaumgießverfahren während des Einbringens des Werkstoffes, insbesondere der Schmelze in den Formenhohlraum und/oder beim Einbringen des Treibmittels in den Formenhohlraum die Formhälften in Entformungsrichtung relativ zueinander geöffnet werden, dass heißt der Formenhohlraum vergrößert wird, ist es möglich, die Schäumung im Kernbereich weiter zu erhöhen, wodurch sich die Poren vergrößern und ein weiterer Steifigkeitsvorteil erzielt werden kann. Dieser wird insbesondere dadurch verstärkt, dass die Teilung der Hälften in Längsrichtung erfolgt und dadurch der Hub insbesondere im Bereich der Seitenwände zu vergrößerten Poren führt. Da die Seitenwände der größte Materialeinsatz der Mittelkonsole sind, kann dadurch die Gewichtsoptimierung noch weiter voran getrieben werden. Somit bietet die erfindungsgemäße Lösung einen hohen Grad an Systemintegration und dadurch weniger Bauteile und mehr Stabilität, weniger Invest für Werkzeuge und Montagevorrichtung, Verminderung der Montagezeiten und ein leichteres Gesamtsystem mit einer besseren Ausnutzung des Bauraums. Schließlich werden weniger Montagemittel erforderlich, da lediglich die zwei Hälften 1, 2 zusammengefügt werden müssen und die Designfreiheit steigt im Seitenbereich, da die Entformungsrichtung günstiger liegt und damit auch konkave Flächenführungen möglich sind.

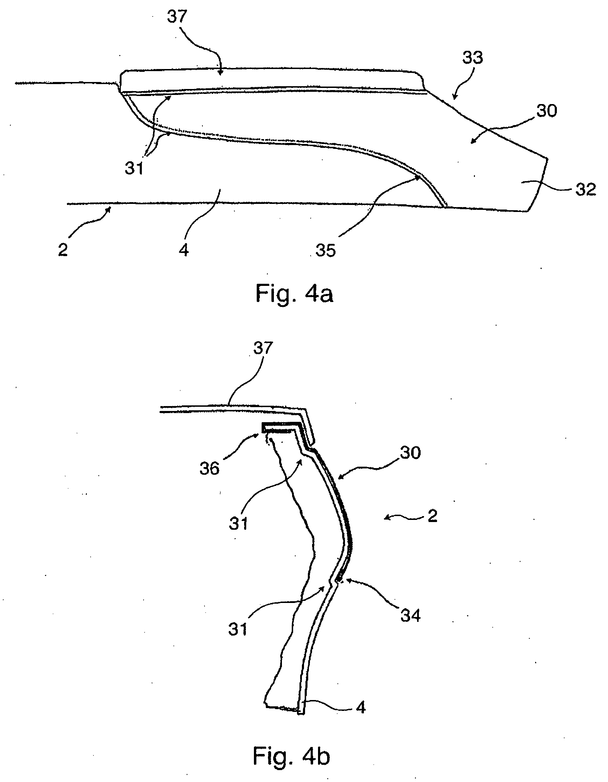

Des Weiteren ist es möglich einen Teilbereich vor, bevorzugt jedoch nach dem Zusammenfügen der zwei Hälften zu kaschieren. Dies ist bei der vorliegenden Erfindung auf vorteilhafte Weise möglich, wie es im Folgenden unter Bezugnahme auf die Figuren 4a und 4b erläutert wird.

Figur 4a ist eine Seitenansicht einer Mittelkonsole gemäß einer zweiten Ausführungsform der vorliegenden Erfindung. In Figur 4a ist nur eine, die zweite Hälfte 2 mit der entsprechenden Seitenwand 4 sichtbar. Dadurch, dass die Hälfte 2 separat und wie zuvor beschrieben mit einer Entformungsrichtung in Querrichtung Q gefertigt wird, ist es möglich einen zu kaschierenden Bereich 30 durch Absätze 31 zu begrenzen. Dabei kann sich eine Kaschierung mit zum Beispiel Leder 32 in einem vorderen Bereich 33 der Mittelkonsole über die Fügestelle zwischen den zwei Hälften erstrecken und diese gegebenenfalls überdecken.

Wie es am besten aus Figur 4b ersichtlich ist, dient der in Figur 4a unterer Absatz 31 dazu die Stärke des Kaschiermaterials 30 auszugleichen, so dass sich im Bereich der Seitenwand 4 eine fluchtende Oberfläche zwischen Kaschiermaterial 30 und dem übrigen Bereich der Seitenwand 4 ergibt. Im Bereich dieses Absatzes 31 ist das Kaschiermaterial 30 vorzugsweise umgeschlagen und durch eine Naht, die später als Ziernaht 35 (siehe Figur 4a) sichtbar ist, zu einem Umbug fixiert. Der in Figur 4a und 4b obere Absatz 31 dient dazu ausreichend Bauraum für das Kaschiermaterial 30 zu schaffen, wobei das Kaschiermaterial 30 am oberen Ende der Hälfte 2 um einen in Querrichtung vorragenden Steg 36 umgebugt ist. Ferner kann dieser Umbugbereich durch eine Blende 37 überdeckt werden.

Wird kein Kaschier- beziehungsweise Dekormaterial 30 auf den Teilbereich aufgebracht, so kann dieser Teilbereich zum Beispiel lackiert werden, wobei die Absätze 31 als abgerundete Kante und/oder Schattenfuge sichtbar bleiben.

## Patentansprüche

1. Mittelkonsole für Fahrzeuge, umfassend eine erste in Längsrichtung (L) der Mittelkonsole verlaufende Seitenwand (3) sowie eine der ersten Seitenwand (3) gegenüberliegende in Längsrichtung (L) der Mittelkonsole verlaufende zweite Seitenwand (4), wobei die Mittelkonsole aus einer.ersten Hälfte (1) umfassend die erste Seitenwand (3), die unmittelbar mit einer zweiten Hälfte (2) umfassend die zweite Seitenwand (4) zusammengefügt ist, aufgebaut ist und von jeder der Seitenwände (3, 4) in Richtung der jeweiligen anderen Seitenwand (4, 3) materialeinheitlich mit der jeweiligen Seitenwand (3, 4) ausgebildete Elemente (11, 12; 14, 15; 16; 17; 26, 27) vorragen, die sich im zusammengefügten Zustand der Hälften zu einem Funktionselement ergänzen, **dadurch gekennzeichnet, dass** die erste und zweite Hälfte jeweils ein thermoplastisches Schaumgussteil sind, wobei die Hälften (1, 2) jeweils eine Entformungsrichtung aufweisen, die im Wesentlichen senkrecht zur jeweiligen Seitenwand (3, 4) und/oder parallel zu den materialeinheitlich mit der jeweiligen Seitenwand ausgebildeten Elementen (11, 12; 14, 15;. 16; 17; 26, 27) verläuft.

2. Mittelkonsole nach Anspruch 1, bei der die Elemente (11, 12; 14, 15; 16; 17; 26, 27) im zusammengefügten Zustand der Hälften mit Ihren der jeweiligen Seitenwand (3, 4) abgewandten Stirnseite in Kontakt stehen.

3. Mittelkonsole nach einem der vorstehenden Ansprüche, bei der die Mittelkonsole entlang einer Ebene (E) in die zwei Hälften (1, 2) geteilt ist und sich die Elemente (11, 12; 14, 15; 16; 17; 26, 27) jeder Seitenwand (3., 4) bis zu der Ebene (E) erstrecken.

4. Mittelkonsole nach einem der vorstehenden Ansprüche, bei der sich die Elemente (11, 12; 14, 15; 16; 17; 26, 27) im zusammengefügten Zustand der Hälften (1, 2) zu einem Luftkanal (21) mit geschlossenem Querschnitt, innen liegenden Versteifungen, einem Ablagefach (3, 9), einer Aufnahme (5) für separate Funktionselemente oder einer Blende (10) für ein Ende der Mittelkonsole in Längsrichtung (L) ergänzen.

5. Mittelkonsole nach einem der vorstehenden Ansprüchen, bei der die Seitenwände (3, 4) im Bereich der Oberseite der Mittelkonsole über Verbindungsstege (14, 15) in einem Abstand zueinander verbunden sind, wobei die Verbindungsstege (14, 15) zum Teil materialeinheitlich mit der ersten Seitenwand (3) und zum Teil materialeinheitlich mit der zweiten Seitenwand (4) ausgebildet sind.

6. Mittelkonsole nach einem der vorstehenden Ansprüche, bei der von jeder der Seitenwände (3, 4) in Richtung der jeweiligen anderen Seitenwand materialeinheitlich mit der jeweiligen Seitenwand ausgebildete Anbindungen (18) vorragen, in denen eine Armlehne bewegbar gelagert ist.

7. Mittelkonsole nach einem der vorstehenden Ansprüche, bei dem zumindest ein Teilbereich der voneinander abgewandten Seiten wenigstens einer Seitenwand unmittelbar mit einem Dekor versehen ist.

8. Mittelkonsole nach Anspruchs 7, bei der der Teilbereich durch wenigstens einen Absatz in der jeweiligen Seitenwand begrenzt ist.

9. Mittelkonsole nach Anspruch 7 oder 8, bei der der Teilbereich eine Oberfläche aufweist, die sich in eine Ebene abwickeln lässt.

10. Verfahren zur Herstellung einer Mittelkonsole für Fahrzeuge umfassend die Schritte:
Herstellen einer ersten Hälfte, mit einer ersten in Längsrichtung der Mittelkonsole verlaufenden Seitenwand (3) in einem thermoplastischen Schaumgießverfahren, so dass von der ersten Seitenwand materialeinheitlich mit der ersten Seitenwand ausgebildet ein Element (11, 14, 26) vorragt;
Herstellen einer zweiten Hälfte (2) mit einer zweiten in Längsrichtung der Mittelkonsole verlaufenden Seitenwind (4) in einem thermoplastischen Schaumgießverfahren, so dass von der zweiten Seitenwand materialeinheitlich mit der zweiten Seitenwand ausgebildet ein Element (12, 15, 27) vorragt;
wobei die Hälften (1, 2) jeweils eine Entformungsrichtung aufweisen, die im Wesentlichen senkrecht zur jeweiligen Seitenwand (3, 4) und/oder parallel zu den materialeinheitlich mit der jeweiligen Seitenwand ausgebildeten Elementen (11, 12; 14, 15; 16; 17; 26, 27) verläuft,
Zusammenfügen der ersten und zweiten Hälfte (1, 2), so dass sich die erste und zweite Seitenwand (3, 4) gegenüberliegen und die Elemente (11, 12; 14, 15; 26, 27) im zusammengefügten Zustand der Hälften zu einem Funktionselement ergänzen.

11. Verfahren nach Anspruch 10, wobei bei dem Herstellen der ersten (1) und zweiten (2) Hälfte ein Formenhohlraum während des Einbringens des Werkstoffs in den Formenhohlraum beim Schaumgießverfahren vergrößert wird.

12. Verfahren nach Anspruch 10 oder 11, bei dem sich die Elemente, im zusammengefügten Zustand der Hälften zu einem Luftkanal (2), mit geschlossenem Querschnitt, einem Ablagefach (7, 9), einer Aufnahme (5) für separate Funktionselemente oder einer Blende (10) für ein Ende der Mittelkonsole in Längsrichtung (L) ergänzen.

## Claims

1. Centre console for vehicles, comprising a first side wall (3) running in the longitudinal direction (L) of the centre console and a second side wall (4) which is opposite the first side wall (3) and runs in the longitudinal direction (L) of the centre console, wherein the centre console is constructed from a first half (1), comprising the first side wall (3) which is directly joined together with a second half (2), comprising the second side wall (4), and elements (11, 12; 14, 15; 16; 17; 26, 27) which are formed of the same material as the respective side wall (3, 4) project from each of the side walls (3, 4) in the direction of the respective other side wall (4, 3), said elements complementing one another in the joined-together state of the halves to form a functional element, **characterized in that** the first and second halves are in each case a thermoplastic foam casting, wherein the halves (1, 2) each have a demoulding direction which runs substantially perpendicularly to the respective side wall (3, 4) and/or parallel to the elements (11, 12; 14, 15; 16; 17; 26, 27) which are formed of same material as the respective side wall.

2. Centre console according to Claim 1, in which, in the joined-together state of the halves, the elements (11, 12; 14, 15; 16; 17; 26, 27) are in contact at the end side thereof that faces away from the respective side wall (3, 4).

3. Centre console according to either of the preceding claims, in which the centre console is divided along a plane (E) into the two halves (1, 2) and the elements (11, 12; 14, 15; 16; 17; 26, 27) of each side wall (3, 4) extend as far as the plane (E).

4. Centre console according to one of the preceding claims, in which, in the joined-together state of the halves (1, 2), the elements (11, 12; 14, 15; 16; 17; 26, 27) complement one another in the longitudinal direction (L) to form an air duct (21) with a closed cross section, internal reinforcements, a storage compartment (3, 9), a receptacle (5) for separate functional elements, or a panel (10) for one end of the centre console.

5. Centre console according to one of the preceding claims, in which the side walls (3, 4) are connected at a distance from one another in the region of the upper side of the centre console via connecting webs (14, 15), wherein the connecting webs (14, 15) are partly formed of the same material as the first side wall (3) and partly of the same material as the second side wall (4).

6. Centre console according to one of the preceding claims, in which attachments (18) which are formed of the same material as the respective side wall and in which an arm rest is mounted movably project from each of the side walls (3, 4) in the direction of the respective other side wall.

7. Centre console according to one of the preceding claims, in which at least a partial region of the mutually averted sides of at least one side wall is directly provided with a trim.

8. Centre console according to Claim 7, in which the partial region is bounded by at least one step in the respective side wall.

9. Centre console according to Claim 7 or 8, in which the partial region has a surface which can be unwound into a plane.

10. Method for producing a centre console for vehicles, comprising the following steps:
Producing a first half, with a first side wall (3) running in the longitudinal direction of the centre console, in a thermoplastic foam casting process such that an element (11, 14, 26) formed of the same material as the first side wall projects from the first side wall;
producing a second half (2), with a second side wall (4) running in the longitudinal direction of the centre console, in a thermoplastic foam casting process such that an element (12, 15, 27) formed of the same material as the second side wall projects from the second side wall;
wherein the halves (1, 2) each have a demoulding direction which runs substantially perpendicularly to the respective side wall (3, 4) and/or parallel to the elements (11, 12; 14, 15; 16; 17; 26, 27) which are formed of the same material as the respective side wall,
joining together the first and second half (1, 2) such that the first and second side wall (3, 4) are opposite each other and, in the joined-together state of the halves, the elements (11, 12; 14, 15; 26, 27) complement one another to form a functional element.

11. Method according to Claim 10, wherein, during the production of the first half (1) and second half (2), a die cavity is enlarged as the material is placed into the die cavity during the foam casting process.

12. Method according to Claim 10 or 11, in which, in the joined-together state of the halves, the elements complement one another in the longitudinal direction (L) to form an air duct (2) with a closed cross section, a storage compartment (7, 9), a receptacle (5) for separate functional elements, or a panel (10) for one end of the centre console.

## Revendications

1. Console centrale pour véhicules, comprenant une première paroi latérale (3) s'étendant dans la direction longitudinale (L) de la console centrale ainsi qu'une deuxième paroi latérale (4) s'étendant en face de la première paroi latérale (3) dans la direction longitudinale (L) de la console centrale, dans laquelle la console centrale est composée d'une première moitié (1) comprenant la première paroi latérale (3), qui est directement assemblée à une deuxième moitié (2) comprenant la deuxième paroi latérale (4) et de chacune des parois latérales (3, 4) partent, en direction de l'autre paroi latérale respective (4, 3), des éléments (11, 12; 14, 15; 16; 17; 26, 27) réalisés avec la même matière que la paroi latérale respective (3, 4), qui se complètent en un élément fonctionnel dans l'état assemblé des moitiés, **caractérisée en ce que** la première et la deuxième moitiés sont respectivement une pièce moulée expansée thermoplastique, dans laquelle les moitiés (1, 2) présentent respectivement une direction de démoulage, qui est essentiellement perpendiculaire à la paroi latérale respective (3, 4) et/ou parallèle aux éléments (11, 12; 14, 15:; 16; 17; 26, 27) réalisés avec la même matière que la paroi latérale respective.

2. Console centrale selon la revendication 1, dans laquelle les éléments (11, 12; 14, 15; 16; 17; 26, 27) sont en contact par leur face frontale située à l'opposé de la paroi latérale respective (3, 4) dans l'état assemblé des moitiés.

3. Console centrale selon l'une quelconque des revendications précédentes, dans laquelle la console centrale est divisée en lesdites deux moitiés (1, 2) le long d'un plan (E) et les éléments (11, 12; 14, 15; 16; 17; 26, 27) de chaque paroi latérale (3, 4) s'étendent jusqu'au plan (E).

4. Console centrale selon l'une quelconque des revendications précédentes, dans laquelle les éléments (11, 12; 14, 15; 16; 17; 26, 27) se complètent, dans l'état assemblé des moitiés (1, 2), en un canal d'air (21) de section transversale fermée, avec des renforts situés à l'intérieur, un vide-poches (3, 9), un logement (5) pour des éléments fonctionnels séparés ou un écran pour une extrémité de la console centrale en direction longitudinale (L).

5. Console centrale selon l'une quelconque des revendications précédentes, dans laquelle les parois latérales (3, 4) sont reliées à distance l'une de l'autre dans la région du côté supérieur de la console centrale au moyen de nervures de liaison (14, 15), dans laquelle les nervures de liaison (14, 15) sont réalisées en partie avec la même matière que la première paroi latérale (3) et en partie avec la même matière que la deuxième paroi latérale (4).

6. Console centrale selon l'une quelconque des revendications précédentes, dans laquelle des liaisons (18), réalisées avec la même matière que la paroi latérale respective, dans lesquelles un accoudoir est monté de façon mobile, partent de chacune des parois latérales (3, 4) en direction de l'autre paroi latérale respective.

7. Console centrale selon l'une quelconque des revendications précédentes, dans laquelle au moins une région partielle des côtés opposés l'un à l'autre d'au moins une paroi latérale est munie directement d'un décor.

8. Console centrale selon la revendication 7, dans laquelle la région partielle est limitée par au moins un épaulement dans la paroi latérale respective.

9. Console centrale selon la revendication 7 ou 8, dans laquelle la région partielle présente une surface, qui peut être développée dans un plan.

10. Procédé de fabrication d'une console centrale pour véhicules, comprenant les étapes suivantes:
fabriquer une première moitié, avec une première paroi latérale (3) s'étendant dans la direction longitudinale (L) de la console centrale par un procédé de coulée de mousse thermoplastique, de telle manière qu'un élément (11, 14, 26) réalisé avec la même matière que la première paroi latérale parte de la première paroi latérale;
fabriquer une deuxième moitié (2) avec une deuxième paroi latérale (4) s'étendant dans la direction longitudinale de la console centrale par un procédé de coulée de mousse thermoplastique, de telle manière qu'un élément (12, 15, 27) réalisé avec la même matière que la deuxième paroi latérale parte de la deuxième paroi latérale;
dans lequel les moitiés (1, 2) présentent respectivement une direction de démoulage, qui est essentiellement perpendiculaire à la paroi latérale respective (3, 4) et/ou parallèle aux éléments (11, 12; 14, 15; 16; 17; 26, 27) réalisés avec la même matière que la paroi latérale respective,
assembler la première et la deuxième moitiés (1, 2), de telle manière que la première et la deuxième parois latérales (3, 4) se fassent face et que les éléments (11, 12; 14, 15; 26, 27) se complètent en un élément fonctionnel dans l'état assemblé des moitiés.

11. Procédé selon la revendication 10, dans lequel, lors de la fabrication de la première moitié (1) et de la deuxième moitié (2), une cavité de moule est agrandie, lors du procédé de coulée de mousse, pendant l'introduction du matériau dans la cavité de moule.

12. Procédé selon la revendication 10 ou 11, dans lequel les éléments se complètent, dans l'état assemblé des moitiés, en un canal d'air (2) avec une section transversale fermée, un vide-poches (7, 9), un logement (5) pour des éléments fonctionnels séparés ou un écran (10) pour une extrémité de la console centrale en direction longitudinale (L).
